Europäisches Patentamt

European Patent Office

Office européen des brevets

(11) Publication number: **0 039 533**
**B1**

(12) EUROPEAN PATENT SPECIFICATION

(45) Date of publication of patent specification: **10.04.85**

(51) Int. Cl.⁴: **G 01 N 21/55**

(21) Application number: **81200471.1**

(22) Date of filing: **01.05.81**

(54) Densitometer.

(30) Priority: **02.05.80 NL 8002565**

(43) Date of publication of application:
**11.11.81 Bulletin 81/45**

(45) Publication of the grant of the patent:
**10.04.85 Bulletin 85/15**

(84) Designated Contracting States:
**AT BE CH DE FR GB IT LI LU NL SE**

(56) References cited:
**FR-A-2 239 675**
**GB-A-1 246 416**
**US-A-3 756 725**

(73) Proprietor: **REPROTEST B.V.**
**ter Gouwstraat 1**
**NL-1093 JX Amsterdam (NL)**

(72) Inventor: **van Domselaar, Jan**
**Thorbeckestraat 29**
**NL-1272 HB Huizen (NL)**
Inventor: **Laane, Albertus Willem**
**Achterwerf 183**
**NL-1357 BW Almere (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The invention relates to a densitometer for measuring the optical density of the surface of a printed web of paper, comprising a photoelectric cell and a light source mounted in a housing such that the light beam emitted by the source is directed onto the surface to be measured at an acute angle and the photoelectric cell is arranged to receive only light reflected from said surface in a direction substantially perpendicular to said surface, along an axis intersecting the axis of the light beam from the source at a point on said surface, and means for applying air under pressure against said web so as to hold said web against an underlying support and to parts of said densitometer to prevent fouling of said parts by suspended particles.

Such a densitometer is known from US—A—3 756 725. Also known is a densitometer in the form of a device which is hand operated by placing the densitometer on a web taken from the stack of webs delivered by a printing press. With said hand densitometer measurements are carried out to find whether the quantity of ink transferred to the ink roller of the press still has the desired value. If said quantity differs from the desired value then also the quantity of the reflected light varies which is an indication, that the ink supply should be adjusted. This known hand densitometer further has the disadvantage that the values measured by it can be spoiled by dust, gradually deposited upon the surface of the photoelectric cell and or the lens or lenses of the light source.

For a correct measurement the web has to lie stable on a base. Measurements in a printing press cannot be done with the known hand densitometer. Within the printing press as well as by hand operation outside the printing press on a web taken from the stack as described above the problem exists that mistakes occur when the area to be measured does not exactly lie at the point of intersection of the axis of the light beam and the axis of the photoelectric cell. From US—A—3 756 725 it is known to arrange a plurality of densitometers over the width of the web to be measured by measuring the reflection of a certain area and comparing it with the reflection of an adjacent reference area.

It is known from this publication to keep clean the lens in the incident light path and the lens and collimator tubes in the reflected light path by means of air washing and to hold the trailing edge of its web down by air pressure from an air bar. This known device can, however, not be used for manual operation but only in the form of a larger machine in particular in the printing press and does not give security with respect to the location of the web to be measured in respect of the point of intersection of the axis of the incident light beam and the axis of the photoelectric cell.

The purpose of the invention is to provide a densitometer by means of which proper measurements can be obtained with the hand operated densitometer as well as with the densitometer mounted in a printing press and with measurements results of constant quantity.

According to the invention this purpose is achieved in that said means for applying air under pressure comprises an air jet nozzle directing an air jet in a direction substantially perpendicular to said surface onto the point of said surface which is under investigation by said densitometer to hold said web against its support, the photoelectric cell being mounted inside said nozzle such that the air flow through said nozzle prevents fouling of said cell.

The flow of air through the air jet nozzle keeps away any dust paper fibers, ink mist and anti-soil powder etc. from the photoelectric cell and presses the paper web at the measuring area against its support to ensure its proper location. Accordingly the measurements are reliable. Contrary to the known hand operated densitometer the densitometer according to the invention need not to be in contact with the web so that soiling of the web is avoided. The densitometer of the invention may also be mounted at a suitable location in printing press and may perform measurements at any desired moment. The light sensitive cell is constantly protected and accordingly measures with constant quality.

From the said US—A—3 756 725 a device is known for controlling the ink supply in a web printing press, said device having a plurality of densitometers distributed over the width of the web to be measured in a direction perpendicular to the direction of movement of the web, as well as a number of ink supply control units equal to the number of densitometers and each adapted to individually control the supply of ink to the ink roller. This known device takes a lot of space by using one single light source for all photoelectric cells and by using reference in between the measured areas. The densitometer according to the invention as claimed in claim 1 can be made extremely small, so that a plurality of said densitometers can be arranged side by side to cover the entire width of the web. This enables a much more detailed control of the ink supply since the ink supply can be controlled over a greater number of smaller areas. This aspect of the invention is claimed in claim 2.

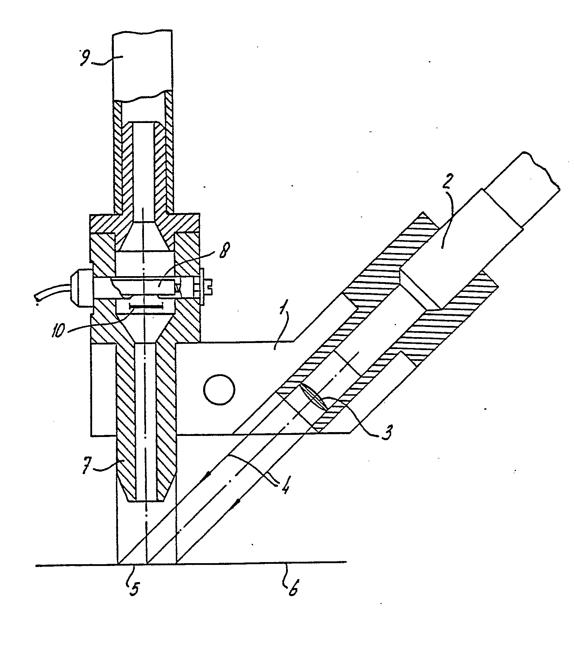

The invention now will be further explained with reference to the drawing showing in cross section the densitometer according to the invention.

The densitometer shown in the drawing comprises a housing 1 in which is provided a light source 2 not shown in detail and directing a light beam bounded by the lines 4 onto a surface 5 of the web 6 through a lens 3.

Perpendicular to the surface 5 a tube 7 acting as a nozzle is provided having in it the photoelectric cell 8 and connected to said tube is a conduit or hose 9 through which may be blown air adapted to stream past the photocell 8 and the infrared filter 10 and being directed as an air jet onto the measured surface 5 and pressing the web 6 against the underlying support (not shown).

## Claims

1. Densitometer for measuring the optical density of the surface (5) of a printed web of paper, comprising a photoelectric cell (8) and a light source (2) mounted in a housing (1) such that the light beam (4) emitted by the source is directed onto the surface (5) to be measured at an acute angle and the photoelectric cell is arranged to receive only light reflected from said surface in a direction substantially perpendicular to said surface, along an axis intersecting the axis of the light beam from the source at a point on said surface, and means (7, 9) for applying air under pressure against said web so as to hold said web against an underlying support and to parts of said densitometer to prevent fouling of said parts by suspended particles, characterized in that said means for applying air under pressure comprises an air jet nozzle (7) directing an air jet in a direction substantially perpendicular to said surface onto the point of said surface which is under investigation by said densitometer to hold said web against its support, the photoelectric cell being mounted inside said nozzle such that the air flow through said nozzle prevents fouling of said cell.

2. Device for controlling the ink supply in a web printing press, said device having a plurality of densitometers distributed over the width of the web to be measured in a direction perpendicular to the direction of movement of the web, as well as a number of ink supply control units equal in number to the number of densitometers and each adapted to individually control the supply ink to the ink roller, wherein the densitometers are densitometers as claimed in claim 1 arranged side by side to cover the entire width of the web.

## Patentansprüche

1. Densitometer zur Messung der optischen Dichte der Oberfläche (5) eines bedruckten Bogens Papier, umfassend eine fotoelektrische Zelle (8) und eine Lichtquelle (2), die so in einem Gehäuse (1) montiert sind, dass der von der Quelle ausgesandte Lichtstrahl (4) unter einem spitzen Winkel auf die zu messende Oberfläche (5) gerichtet ist und dass die fotoelektrische Zelle so angeordnet ist, dass sie nur solches Licht empfängt, das von der genannten Oberfläche in eine zur genannten Oberfläche im wesentlichen senkrecht liegende Richtung entlang einer Achse reflektiert wird, welche die Achse des von der Quelle ausgesandten Lichtstrahls an einem Punkt der genannten Oberfläche schneidet, sowie Mittel (7, 9) zum Anblasen von Druckluft gegen den genannten Bogen, um den genannten Bogen gegen eine darunterliegende Stütze zu halten, und auf Teile des genannten Densitometers, um die Verschmutzung dieser Teile durch suspendierte Teilchen zu vermeiden, dadurch gekennzeichnet, dass die genannten Mittel zum Anblasen von Druckluft eine Düse (7) für einen Luftstrahl umfassen, die auf den mit dem genannten Densitometer zu untersuchenden Punkt der genannten Oberfläche einen Luftstrahl in eine Richtung richtet, die im wesentlichen senkrecht zur genannten Oberfläche liegt, um den genannten Bogen gegen seine Stütze zu halten, wobei die fotoelektrische Zelle innerhalb der genannten Düse montiert ist, so dass der Fluss der Luft durch die genannte Düse die Verschmutzung der genannten Zelle vermeidet.

2. Vorrichtung zum Steuern der Zufuhr der Tinte in einer Druckerpresse für Bogen, wobei diese Vorrichtung eine Mahrzahl von Densitometern aufweist, die über die Breite des Bogen verteilt sind, der in einer senkrecht zur Bewegungsrichtung des Bogens liegenden Richtung zu messen ist, sowie eine Anzahl von Tintenzufuhr-Steuereinheiten in gleicher Anzahl wie die Densitometer und jedes dazu geeignet einzeln die Zufuhr der Tinte zur Tintenwalze zu steuern, wobei die Densitometer die im Anspruch 1 beanspruchten Densitometer sind und Seite an Seite angeordnet sind, um die gesamte Breite des Bogens zu decken.

## Revendications

1. Densitomètre pour mesurer la densité optique de la surface (5) d'une feuille imprimée de papier, comprenant une cellule photoélectrique (8) et une source (2) de lumière montées dans un boîtier (1) de façon telle que le rayon lumineux (4) émis par la source est dirigé vers sous un angle aigu la surface (5) à mesurer et que la cellule photoélectrique est disposée de façon à recevoir seulement la lumière réfléchie par ladite surface dans une direction essentiellement perpendiculaire à ladite surface, le long d'un axe coupant l'axe du faisceau lumineux provenant de la source en un point de ladite surface, et des moyens (7, 9) pour appliquer de l'air sous pression contre ladite feuille de façon à maintenir ladite feuille contre un support sous-jacent et à des parties dudit densitomètre pour empêcher ces parties d'être souillées par des particules en suspension, caractérisé en ce que lesdits moyens pour appliquer de l'air sous pression comprennent une buse (7) pour jet d'air qui dirige un jet d'air dans une direction essentiellement perpendiculaire à ladite surface sur un point de ladite surface destiné à être étudié au moyen dudit densitomètre, pour appliquer ladite feuille contre son support, la cellule photoélectrique étant montée à l'intérieur de ladite buse de façon que le flux d'air au travers de ladite buse empêche la souillure de ladite cellule.

2. Dispositif de commande de l'alimentation en encre dans une presse à imprimer des feuilles, ledit dispositif comprenant une pluralité de densitomètres répartis sur la largeur de la feuille à mesurer dans une direction perpendiculaire à la direction du mouvement de la feuille, et aussi un nombre d'unités de commande de l'alimentation en encre égal au nombre de densitomètres, chacune étant prévue pour commander individuellement l'alimentation en encre d'un rouleau en-

## 0 039 533

creur, les densitomètres étant des densitomètres tels que revendiqués à la revendication 1 arrangés côte à côte pour couvrir l'entière largeur de la feuille.